# EUROPEAN PATENT APPLICATION

(11) **EP 2 208 417 A1**
(43) Date of publication of application: **21.07.2010**
(21) Application number: 09150854.9
(22) Date of filing: 19.01.2009
(51) Int. Cl.: A01K 75/00

(54) **Attachment device for a sensor module**

(71) Applicant: Skjold-Larsen, Henning, 3120 Tönsberg (NO)
(72) Inventor: Skjold-Larsen, Henning, N-3120 Tonsberg (NO); Siglo, Per Kolbjorn, N-33118 Tonsberg (NO); Eide, Thor, N-3175 Asgårdstrand (NO)
(74) Representative: Onsagers Ltd

(57) **Abstract**

An attachment device is arranged for attaching a sensor module (1) to fishing gear, where the sensor module (1) comprises a lug (2). The device comprises an elongated element (3) arranged for insertion through the lug (2) and for placement against the lug on a first side (8) of said lug (2), with the ends (4) of the elongated element (3) resting against the lug (2) on said first side (8) of the lug (2), a rope (5) fastened to the elongated element (3) and arranged for placement on a second side (7) of the lug (2), which rope (5) is detachably secured to the lug (2) by means of the elongated member (3), wherein the rope (5) is arranged for connection to the fishing gear.

## Description

The invention relates to an attachment device arranged for attaching a sensor module to fishing gear, such as a trawl device, a purse seiner, a ring net, etc. The invention also relates to a method for attaching a sensor module to such fishing gear.

Even though the invention will be explained in more detail with reference to technology associated with trawl gear, it can be used in connection with all fishing gear that is monitored by means of sensor modules.

There are several types of sensor modules employed in connection with trawling operations, where the object is to chart the position of the trawl as well as the environment around the trawl. Examples of such sensors include symmetry sensors, trawl eye or trawl sounder sensors (which show the area in which the catch is taking place), trawl speed sensors, distance sensors (for measuring distance between directive modules), net transponders, temperature sensors, quantity sensors, depth sensors, rip sensors and bottom contact sensors.

The common feature of these sensor modules is that they are equipped with connecting bodies for attachment to the trawl. The bodies are generally in the form of lugs, and connection/disconnection to/from the trawl is implemented by attaching a screw shackle to the lugs, and by passing an elastic cord/wire/rope through the trawl's mesh and through the screw shackle.

WO 2005/070200 describes an attachment device for a sensor module which attachment device comprises a combination of different elements. Connection to lugs in the sensor module is provided by screw shackles and connection to the fishing gear is provided by lockable rings.

The known attachment devices have the disadvantage that they are difficult to service during normal trawl operation conditions (wet equipment, cold weather, use of protective gloves or the like that make the screwing operation extremely awkward). Furthermore, the screw shackle might be damaged, i.e. bent during use, and be difficult to open. In addition, attaching the sensor module by passing an elastic cord through the mesh is complicated, and does not ensure an exact and repeatable positioning of the sensor modules.

The sensor modules have to be disconnected from the trawls, for example, when charging the sensor module's batteries.

The sensor modules comprise a hard outer shell of a plastic material, which becomes slippery when wet. In addition, the weight of the modules is substantial. This results in difficulties in handling and transport.

The attachment between the trawl and the sensor module also has to withstand rough operating conditions and be designed so that it disengages in a controlled manner if the traction force in the attachment exceeds a specific value, in order to avoid damage of the equipment. The attachment should not be disengaged by breakage of the lugs in the sensor module, since this will lead to destruction of the outer plastic shell, with a consequent deterioration in the sensor's protection.

It is an object of the invention to provide an attachment device for attaching a sensor module to fishing gear, such as for example a trawl device, which permits easy and swift connection and disconnection of the sensor module.

It is also an object of the invention to be able to ensure repeatability with regard to mounting the sensor modules on the fishing gear.

It is also an object of the invention to provide a device which is fully compatible with the sensors already present in the market in terms of lug diameters and breaking strengths.

These objects are achieved by means of an attachment device according to the invention, which is **characterised in that** it comprises:
- an elongated element arranged for insertion through the lug and for placement against the lug on a first side of said lug, with the ends of the elongated element protruding from the lug on said first side of the lug,
- a rope fastened to the elongated element and arranged for placement on a second side of the lug, which rope is detachably secured to the lug by means of the elongated member,
wherein the rope is arranged for fastening to the fishing gear.

The invention also relates to a method for attaching a sensor device provided with a lug to fishing gear comprising the following steps:
- fastening a rope to an elongated element,
- inserting the elongated element through a lug in such a manner that the ends of the elongated element abut the lug on a first side of the lug and the rope is situated on a second side of the lug and
- fastening the rope to the fishing gear. It is also possible according to the invention to alter the sequence of the above mentioned steps, e.g. by attaching the rope to the fishing gear before the elongated element is lead through the lug.

Although one attachment device for attachment of a sensor module is mentioned this far, there are many cases where the sensor modules comprise two to four or more lugs and it will be obvious that several attachment devices according to the invention can be used for a single module. This will be clearly shown in the examples.

The elongated element in the device according to the invention is arranged to provide a detachable connection between the sensor module and a rope. The rope can e.g. be connected to the fishing gear by means of a ring sewn to a fixed position in the fishing gear. Once the elongated element is in place, the rope can be used as a handle for transporting the sensor module.

The elongated element is easy to use and connection to the sensor module only requires insertion of the elongated element in the lug. This operation can be performed swiftly and reliably even is the sensor module surface is slippery, in bad weather, and when wearing gloves or when the operator's dexterity is limited in another manner.

In one embodiment of the invention the elongated element is straight while in another embodiment it is curved. These alternatives permit to adapt the attachment device to sensor modules with different shapes. In a variant of the curved element embodiment, the sensor module comprises a shoulder in the area nearby the lug which shoulder provides a seat for the elongated element and the elongated element is curved in a shape corresponding to the shoulder. This variant provides a highly stable placement of the elongated element against the lug as the shoulder provides support together with the lug.

In one embodiment of the invention the elongated element is provided with openings and the rope is thread through said openings. This provides flexibility regarding the type of rope which can be used. Said openings can be situated on the ends of the elongated element or at a distance from said ends. In the former case the rope will be in contact with the lug, this could possibly lead to wearing of the rope because the lug is in general made of metal. The latter case provides mainly contact between the rope and the elongated element and gives thus a larger choice of materials for both components.

In another embodiment of the invention the rope is integrated with the elongated element.

The rope itself comprises in one embodiment of the invention a single strand where one section is thread through the openings in the elongated element. As will be shown later this single strand can be formed as a loop and arranged around a ring fastened to the fishing gear. In another embodiment of the invention the rope comprises two strands, each strand being thread through one opening in the elongated element and fixed to it or fastened to the elongated element in another manner.

The elongated element in one embodiment of the invention is hollow. This embodiment provides openings at the ends of the element (mentioned earlier) in an easy manner. In the case the openings are situated at a distance from the ends, the sector of rope lying between the openings will be protected by the element's wall.

In one embodiment of the invention the elongated element is flexible. This facilitates introduction through the lug. The element's degree of flexibility is in a variant of this embodiment chosen taking into consideration the traction force which will lead to disengagement. If the elongated element is highly flexible, disengaging will occur at lower force than will a less flexible element. This can be used to protect the sensor module casing and the net from damage.

In one embodiment of the invention the rope is elastic. This helps ensure that the sensor module is optimally fastened to the fishing gear.

Although different features of the invention have been presented as belonging to different embodiments it will be obvious for the skilled man that the invention can comprise combinations of these embodiments as e.g. a flexible, hollow, curved elongated element and a two-stranded rope.

The invention will now be explained in greater detail by means of the attached drawings, in which:
figure 1 illustrates a first embodiment of the attachment device according to the invention in use,
figure 2 illustrates said first embodiment in greater detail,
figure 3 illustrates a second embodiment of the invention,
figure 4 illustrates placement of an attachment device according to the invention on a module,
figure 5 illustrates a third embodiment of the invention,
figure 6 illustrates said third embodiment in use,
figure 7 illustrates a fourth embodiment of the invention,
figure 8 illustrates an embodiment of the invention where the elongated element is curved,
figures 9A and 9B illustrate an embodiment of the invention where the rope is made of a single strand,
figures 10-15 show the embodiment in figure 8 in greater detail,
figures 16-17 show an embodiment of the invention where the elongated element has an elliptical form,
figures 18-22 illustrate placement of different sensor modules on a fishing device.

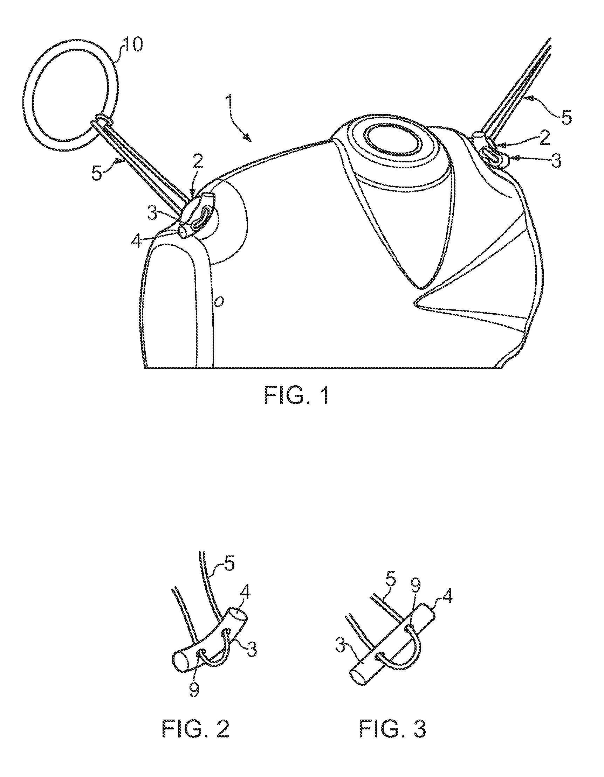

Figure 1 illustrates a first embodiment of the attachment device according to the invention in use. The figure shows a sensor module 1 which in this case is a temperature sensor and which comprises two lugs 2. An elongate element 3 is situated on a first side of each lug 2. Each lug is formed as an inverted U and the ends 4 of the elongated element 3 abuts on the legs of said inverted U. The ends can protrude from said legs, be levelled with said legs, or abut against part of the legs' surface. The lug can comprise cylindrical or flat legs, and the elongated element can in a corresponding manner be cylindrical or flat. Rope 5 is fastened to the elongated element and exerts a force which presses the elongated element against the lug. Rope 5 if lead through the lug and exits is on its side opposite the elongated element 3. Rope 5 is in a section opposite the elongated element fastened to a ring 10 which is permanently or detachably fixed to the fishing gear.

Figure 2 shows rope 5 which is thread through openings 9 situated at a distance from the ends of the elongated element 3. In this embodiment of the invention the elongated element 3 is curved.

Figure 3 illustrates a second embodiment of the invention, where the elongated element 3 is straight.

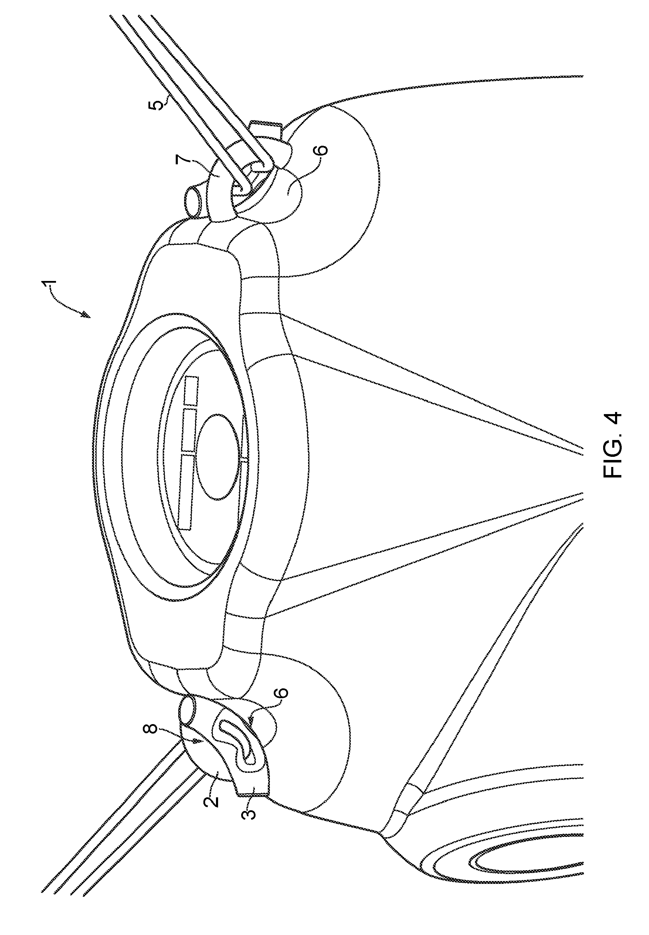

Figure 4 shows an embodiment of the invention where sensor module 1 comprises a shoulder 6 in the area near the lug 2. The elongated element 3 has a curvature adapted to this shape in the sensor module and rests on said shoulder 6. The figure shows also both sides of lug 2, a first side 7 where the rope exits the lug and a second side 8 where the elongated element 3 is situated. When in use, the curvature of the lug and the curvature of the elongated element will be complementary and this will lead to a higher resistance against disengagement.

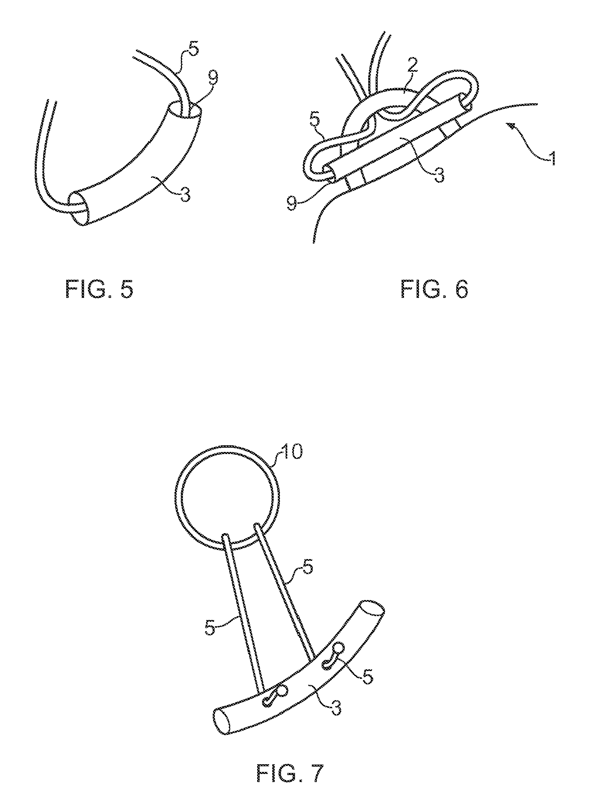

Figures 5 and 6 illustrate a third embodiment of the invention. In this embodiment openings 9 are provided on the ends of the elongated element 3 which is hollow, and rope 5 is thread through said openings. On figure 6 one can see how rope 5 is lead through lug 2. This embodiment of the invention is suitable for the cases where the elongated element has limited flexibility.

In figures 1-6 a single stranded rope is shown but it will be obvious for the skilled man that two stranded ropes can be used as well.

Figure 7 illustrates a fourth embodiment of the invention, where rope 5 comprises two strands which pass through openings 9 and are fixed to points 11 (internal or external) in the elongated element 3.

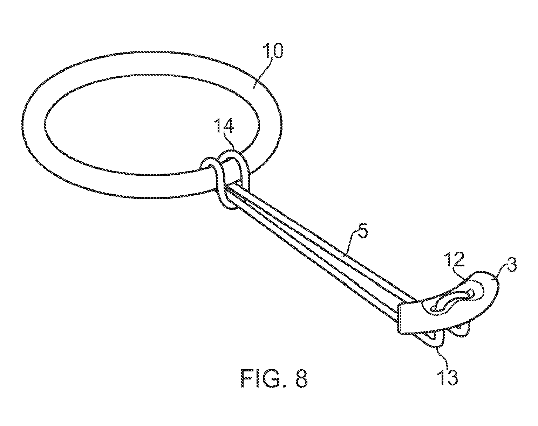

Figure 8 illustrates an embodiment of the invention where the elongated element 3 is curved and has a diameter which varies along the element, being smaller in the ends and bigger in the middle. Reference number 12 denotes an area where angles and curvatures are carefully designed in order to avoid damage to the rope 5, as will be explained later. This figure illustrates rope 5 in the position is will have during use, that is with a bending 13 and a running knot 14 around ring 10.

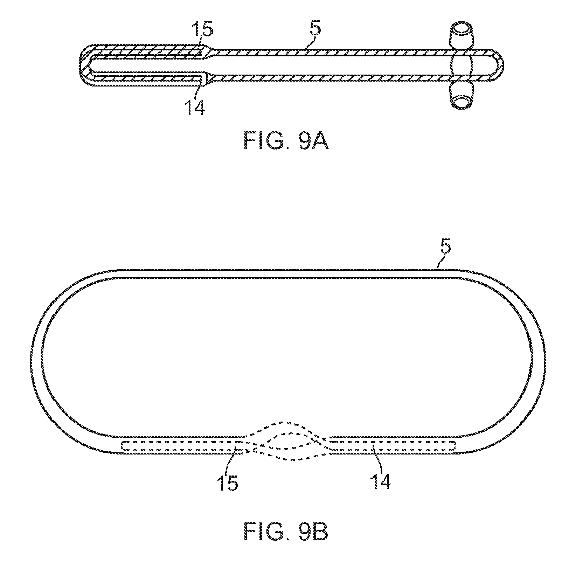

Figures 9A and 9 illustrate an embodiment of the invention where rope 5 is made of a single strand. In order to provide a closed loop, after passing through openings 9 both ends of rope 5 are spliced. Thereafter the spliced edges of both ends are sewn to one another in order to avoid opening. The rope is sewn with a high degree of overlapping between the ends and with a longitudinal seam to avoid relative displacement of the ends in relation to one another. In this embodiment of the invention the length 1 between the ends of the loop is 150mm ± 30mm, but it can vary depending on the position in the fishing device from a length of a few centimetres to several meters. It is also possible to provide a longer rope by adding pieces to rope 5. Rope 5 which is fastened to the sensor module by means of the elongated elements will ensure a controlled rupture and when choosing pieces for addition to rope 5 one must take this into consideration. As mentioned before, rope 5 must resist traction not only in the presence of salt water and sun, but also when in contact with the elongated element 3. Rope 5 will be curved in the area between openings 9 and this curved section must be considered in detail as ropes usually have high traction strength but limited bending strength. A distance between openings 9 of 4-10mm, preferably 6-8mm is suitable to avoid bending breakage. In the present embodiment of the invention, rope 5 is chosen as the weakest point, so that in case of a traction effort which exceeds a predetermined threshold, rope 5 will break avoiding damage to lugs 2. Rope 5 is thus designed with a breaking strength of approximately 7000N-10000N. Rope 5 has in another embodiment of the invention a diameter of 2,5mm and a tensile strength of 7000 ±1000N. Ropes Ocean 3000 ® with a diameter of 3mm can e.g. be used.

The diameter of rope 5 is a factor which must be considered as the size of the lugs in the sensor module establishes a limitation. At the same time the rope's strength depends among other things on such diameter which should be as large as possible. One limitation is established by the size of the lugs, with a 12mm opening with a diameter of 10mm. A rope diameter of 2-5mm and preferably 2,5-3mm will satisfy the above mentioned requirements.

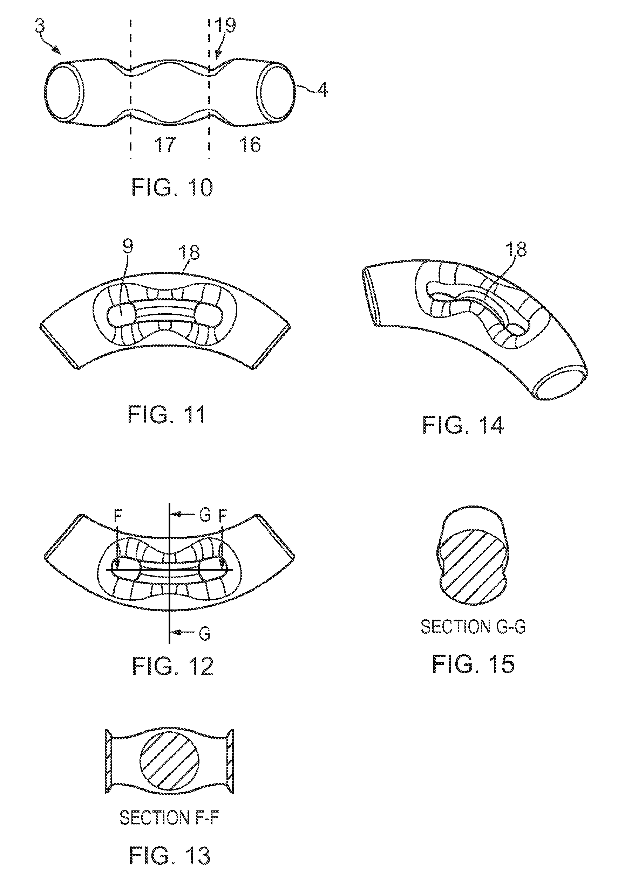

Figure 10 shows an embodiment of the invention where the elongated element is designed for use preferably together with a rope 5 as described right above, that is a single strand of rope. Element 3 can be divided into three sections defined by openings 9 which in this case are provided at a distance from ends 4. End sections 16 are curved (see figure 11) and at the time conical. This shape facilitates introduction of the elongated element in lug 2 of the sensor module. The central section 17 comprises a groove 18 (figure 11) designed for contact with the rope 5 and rounded surfaces to protect rope 5 from tearing. The Section 17 is also curved in the same manner as sections 16 and is adapted to rest against a shoulder in the sensor module. In the area corresponding to openings 9 further depressions 19 are provided. As one can see, the element is symmetrical about an horisontal plane and also about a longitudinal axis.

Figures 11, 12 and 14 show openings 9 which have round edges but which in this embodiment of the invention are not perfectly circular. As mentioned above, rope diameter is related to rope strength and thus, this diameter must be a s large as possible. In order to accommodate a large diameter, openings 9 are enlarged in the element's longitudinal direction as this does not lead to any reduction in wall thickness for the openings.

Figure 13 is a section along line FF in figure 12 and shows that section 17 has an enlarged diameter in the middle. Smooth surfaces are provided.

Figure 15 shows a section along line GG in figure 12.

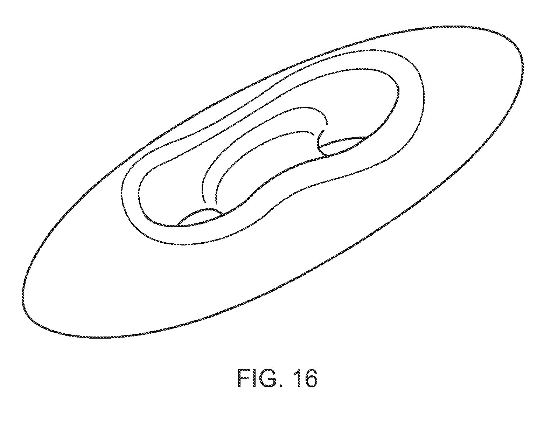

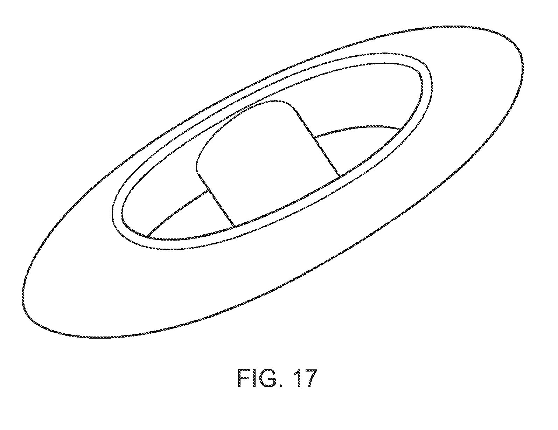

Figures 16 and 17 show one embodiment of the invention where the elongated element is straight and has an elliptic form. This form is specially advantageous for inserting the elongated element in lugs of reduced dimensions. Due to the enlarged section in the middle this alternative reduces the chances of unintended disengagement of the element from the lug significantly. The elongated element with elliptical form can be straight or curved.

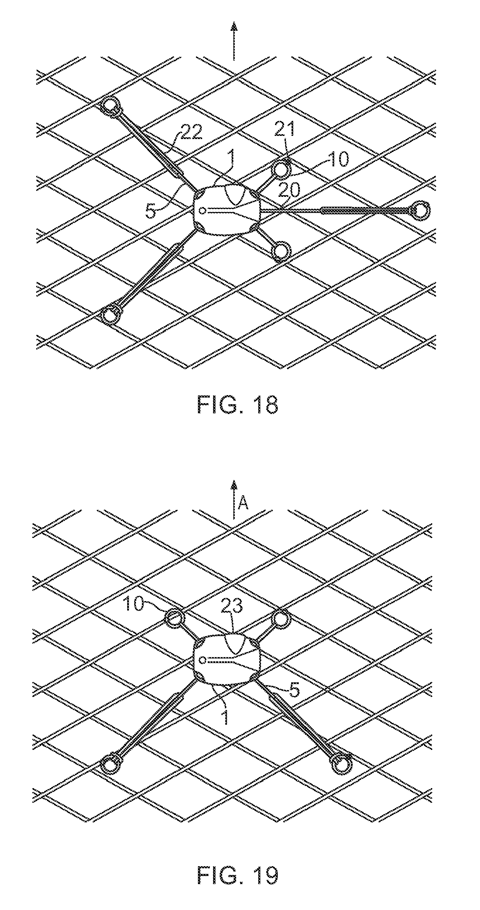

Figures 18-22 illustrate generally placement of different sensor modules on a fishing device.

Figure 18 illustrates a catch sensor 1 on a trawl net. Catch sensor 1 will be triggered when a threshold in tension force transmitted by means of rope/wire 20 to the sensor is exceeded. Mounting rings 10 are sewn to the net at fixed positions 21. Elastic straps 22 connect non-elastic ropes 5 to rings 10.

Figure 19 illustrates a depth/temperature/angle sensor module on a trawl net. This type of module does not comprise a tension sensor as illustrated in figure 8. Arrow A shows the direction towards the towing vessel. Reference number 23 denotes a transducer, which must have a clear line of sight to the towing vessel.

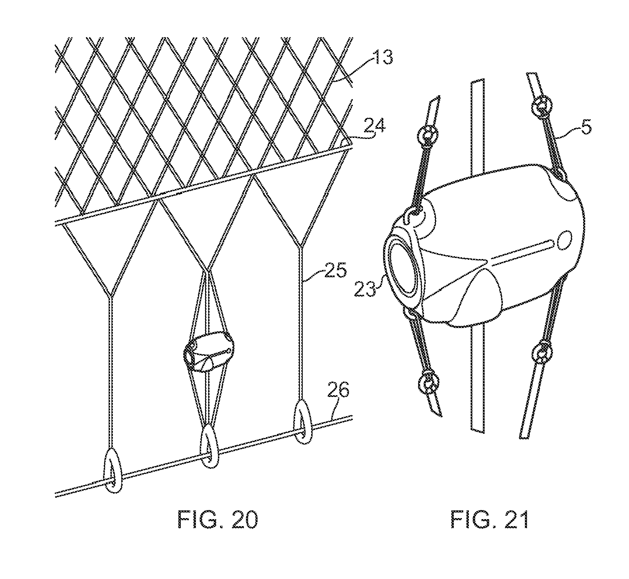

Figures 20 and 21 show a purse seine sensor, which e.g. can be a depth, temperature, height sensor or a combination of sensors. In the figure 24 is a lead rope, 25 is a crow foot/extension rope and 26 purse wire. Sensor module 1 is attached by means of non-elastic ropes 5 and elastic straps 14.

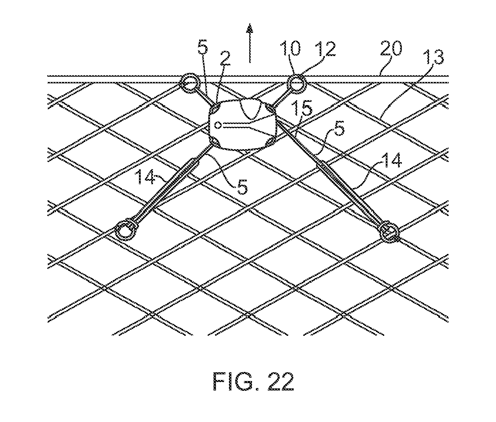

Figure 22 illustrates a rip sensor fastened to a foot rope. Rip sensor 1 is mounted behind footrope 20 in the area which is prone to ripping while trawling. Two mounting rings 10 for rope 5 are sewn on to the foot rope 20, sufficiently apart to avoid twisting of the sensor. For the rear attachment, use of two rubber straps is shown. As one can see, on side of sensor module 1 is connected to the fishing gear by means of two lugs 2 while the other side is connected by one lug 2 and the catch sensors rope.

The invention provides for swift and reliable attachment of a sensor module to a fishing gear. The different embodiments of the invention permit to adapt it to different types and shapes of sensors.

## Claims

1. Attachment device arranged for attaching a sensor module (1) to fishing gear, where the sensor module (1) comprises a lug (2), **characterised in that** the device comprises:
an elongated element (3) arranged for insertion through the lug (2) and for placement against the lug on a first side (8) of said lug (2), with the ends (4) of the elongated element (3) resting against the lug (2) on said first side (8) of the lug (2),
- a rope (5) fastened to the elongated element (3) and arranged for placement on a second side (7) of the lug (2), which rope (5) is detachably secured to the lug (2) by means of the elongated member (3),
wherein the rope (5) is arranged for connection to the fishing gear.

2. Attachment device according to claim 1,
**characterised in that** the elongated element (3) is straight or curved.

3. Attachment device according to claim 1,
**characterised in that** the sensor module (1) comprises a shoulder (6) in the area nearby the lug (2) which shoulder provides a seat for the elongated element (3) and the elongated element (3) is curved in a shape corresponding to the shoulder (6).

4. Attachment device according to claim 1,
**characterised in that** the elongated element (3) is provided with openings (9) and the rope (5) is thread through said openings (9).

5. Attachment device according to claim 4,
**characterised in that** the rope (5) comprises a single strand which is thread through the openings (9) in the elongated element or two strands where each strand is thread through one opening (9) in the elongated element (3) and fastened to it.

6. Attachment device according to claim 4,
**characterised in that** said openings (9) are situated on the ends of the elongated element (3) or at a distance from the ends of the elongated element (3).

7. Attachment device according to claim 1,
**characterised in that** the elongated element (3) is hollow and/or flexible and/or the rope (5) is elastic.

8. Attachment device according to claim 1,
**characterised in that** the rope is arranged for connection to a ring (10) fastened to the fishing gear.

9. Attachment device according to claim 1,
**characterised in that** the elongated element has an elliptical form.
